# EUROPEAN PATENT APPLICATION

(11) **EP 4 757 411 A1**
(43) Date of publication of application: **10.06.2026**
(21) Application number: 24848404.0
(22) Date of filing: 05.08.2024
(51) Int. Cl.: H04W 36/00

(54) **CELL HANDOVER METHOD AND APPARATUS, TERMINAL, AND NETWORK SIDE DEVICE**

(30) Priority: 03.08.2023 CN 202310972876; 23.08.2023 CN 202311067856
(71) Applicant: Vivo Mobile Communication Co., Ltd., Dongguan, Guangdong 523863 (CN)
(72) Inventor: WANG, Chenxi, Dongguan, Guangdong 523863 (CN); BAO, Wei, Dongguan, Guangdong 523863 (CN); CHEN, Li, Dongguan, Guangdong 523863 (CN); WANG, Yangyang, Dongguan, Guangdong 523863 (CN)
(74) Representative: Walaski, Jan Filip
(86) International application number: PCT/CN2024/109689
(87) International publication number: WO 2025/026451

(57) **Abstract**

The present application relates to the technical field of communications, and discloses a cell handover method and apparatus, a terminal, and a network side device. The cell handover method of embodiments of the present application comprises : a terminal receives a first message sent by a network side device, wherein the first message is used for triggering cell handover; and the terminal performs a first operation on the basis of the first message, wherein the execution of the first operation comprises any one of the following : when the first message satisfies a first condition, performing random access channel (RACH)-less cell handover, the first condition being a condition corresponding to the RACH-less cell handover; when the first message satisfies a second condition, performing contention-free random access (CFRA)-based cell handover, the second condition being a condition corresponding to the CFRA-based cell handover; and when the first message satisfies a third condition, performing contention-based random access (CBRA)-based cell handover, the third condition being a condition corresponding to the CBRA-based cell handover.

## Description

### CROSS-REFERENCE TO RELATED APPLICATIONS

This application claims priority to Chinese Patent Application No. 202310972876.1, filed in China on August 03, 2023, and this application claims priority to Chinese Patent Application No. 202311067856.6, filed in China on August 23, 2023, which are incorporated herein by reference in their entireties.

### TECHNICAL FIELD

This application pertains to the field of communication technologies, and specifically relates to a cell switch method and apparatus, a terminal, and a network-side device.

### BACKGROUND

In a related technology, a layer 1 (Layer 1, L1)/layer 2 (Layer 2, L2) triggered mobility (L1/L2 Triggered Mobility, LTM) supports a random access channel (Random Access Channel, RACH)-based cell switch manner and a RACH-less (RACH-less) cell switch manner. The RACH-based switch manner includes a contention free random access (Contention Free Random Access, CFRA)-based cell switch and contention based random access (Contention Based Random Access, CBRA)-based cell switch. In the related technology, during selection of a cell switch manner, a terminal performs cell switch based on a fixed cell switch manner, resulting in poor flexibility in performing cell switch by the terminal.

### SUMMARY

Embodiments of this application provide a cell switch method and apparatus, a terminal, and a network-side device, to resolve a problem of relatively poor flexibility in performing cell switch by the terminal.

According to a first aspect, a cell switch method is provided, including:
receiving, by a terminal, a first message sent by a network-side device, where the first message is used to trigger cell switch; and
performing, by the terminal, a first operation based on the first message, where
the performing a first operation includes any one of the following:
   performing random access channel RACH-less cell switch in a case that the first message meets a first condition, where the first condition is a condition corresponding to RACH-less cell switch;
   performing contention free random access CFRA-based cell switch in a case that the first message meets a second condition, where the second condition is a condition corresponding to CFRA-based cell switch; and
   performing contention based random access CBRA-based cell switch in a case that the first message meets a third condition, where the third condition is a condition corresponding to CBRA-based cell switch.

According to a second aspect, a cell switch method is provided, including:
sending, by a network-side device, a first message to a terminal, where the first message is used to indicate to perform a first operation, where
that the first message is used to indicate to perform a first operation includes any one of the following:
   in a case that the first message meets a first condition, the first message is used to indicate to perform RACH-less cell switch, where the first condition is a condition corresponding to RACH-less cell switch;
   in a case that the first message meets a second condition, the first message is used to indicate to perform contention free random access CFRA-based cell switch, where the second condition is a condition corresponding to CFRA-based cell switch; and
   in a case that the first message meets a third condition, the first message is used to indicate to perform contention based random access CBRA-based cell switch, where the third condition is a condition corresponding to CBRA-based cell switch.

According to a third aspect, a cell switch apparatus is provided. A terminal includes the cell switch apparatus, and the apparatus includes:
a receiving module, configured to receive a first message sent by a network-side device, where the first message is used to trigger cell switch; and
an execution module, configured to perform a first operation based on the first message, where
the performing a first operation includes any one of the following:
   performing random access channel RACH-less cell switch in a case that the first message meets a first condition, where the first condition is a condition corresponding to RACH-less cell switch;
   performing contention free random access CFRA-based cell switch in a case that the first message meets a second condition, where the second condition is a condition corresponding to CFRA-based cell switch; and
   performing contention based random access CBRA-based cell switch in a case that the first message meets a third condition, where the third condition is a condition corresponding to CBRA-based cell switch.

According to a fourth aspect, a cell switch apparatus is provided. A network-side device includes the cell switch apparatus, and the apparatus includes:
a sending module, configured to send a first message to a terminal, where the first message is used to indicate to perform a first operation, where
that the first message is used to indicate to perform a first operation includes any one of the following:
   in a case that the first message meets a first condition, the first message is used to indicate to perform RACH-less cell switch, where the first condition is a condition corresponding to RACH-less cell switch;
   in a case that the first message meets a second condition, the first message is used to indicate to perform contention free random access CFRA-based cell switch, where the second condition is a condition corresponding to CFRA-based cell switch; and
   in a case that the first message meets a third condition, the first message is used to indicate to perform contention based random access CBRA-based cell switch, where the third condition is a condition corresponding to CBRA-based cell switch.

According to a fifth aspect, a terminal is provided. The terminal includes a processor and a memory. The memory stores a program or instructions capable of running on the processor, and the steps of the method according to the first aspect are implemented when the program or the instructions are executed by the processor.

According to a sixth aspect, a network-side device is provided. The network-side device includes a processor and a memory. The memory stores a program or instructions capable of running on the processor, and the steps of the method according to the second aspect are implemented when the program or the instructions are executed by the processor.

According to a seventh aspect, a terminal is provided, including a processor and a communication interface. The communication interface is configured to receive a first message sent by a network-side device, where the first message is used to trigger cell switch; and the processor is configured to perform a first operation based on the first message, where
the performing a first operation includes any one of the following:
performing random access channel RACH-less cell switch in a case that the first message meets a first condition, where the first condition is a condition corresponding to RACH-less cell switch;
performing contention free random access CFRA-based cell switch in a case that the first message meets a second condition, where the second condition is a condition corresponding to CFRA-based cell switch; and
performing contention based random access CBRA-based cell switch in a case that the first message meets a third condition, where the third condition is a condition corresponding to CBRA-based cell switch.

According to an eighth aspect, a network-side device is provided, including a processor and a communication interface. The communication interface is configured to send a first message to a terminal, where the first message is used to indicate to perform a first operation, where
that the first message is used to indicate to perform a first operation includes any one of the following:
in a case that the first message meets a first condition, the first message is used to indicate to perform RACH-less cell switch, where the first condition is a condition corresponding to RACH-less cell switch;
in a case that the first message meets a second condition, the first message is used to indicate to perform contention free random access CFRA-based cell switch, where the second condition is a condition corresponding to CFRA-based cell switch; and
in a case that the first message meets a third condition, the first message is used to indicate to perform contention based random access CBRA-based cell switch, where the third condition is a condition corresponding to CBRA-based cell switch.

According to a ninth aspect, a cell switch system is provided, including a terminal and a network-side device. The terminal may be configured to perform the steps of the method according to the first aspect, and the network-side device may be configured to perform the steps of the method according to the second aspect.

According to a tenth aspect, a readable storage medium is provided. The readable storage medium stores a program or instructions, and the steps of the method according to the first aspect or the steps of the method according to the second aspect are implemented when the program or the instructions are executed by a processor.

According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored on a storage medium, and the computer program/program product is executed by at least one processor to implement the steps of the method according to the first aspect or the steps of the method according to the second aspect.

In the embodiments of this application, the terminal receives the first message sent by the network-side device, where the first message is used to trigger cell switch; and the terminal performs the first operation based on the first message, where the performing the first operation includes any one of the following: performing random access channel RACH-less cell switch in the case that the first message meets the first condition, where the first condition is a condition corresponding to RACH-less cell switch; performing contention free random access CFRA-based cell switch in the case that the first message meets the second condition, where the second condition is a condition corresponding to CFRA-based cell switch; and performing contention based random access CBRA-based cell switch in the case that the first message meets the third condition, where the third condition is a condition corresponding to CBRA-based cell switch. In this way, the terminal performs corresponding cell switch based on a condition met by the first message used to trigger cell switch, so that flexibility in performing cell switch by the terminal can be improved.

### BRIEF DESCRIPTION OF DRAWINGS

FIG. 1 is a block diagram of a wireless communication system to which an embodiment of this application is applicable;
FIG. 2 is a schematic diagram of an LTM switching process according to an embodiment of this application;
FIG. 3 is a flowchart 1 of a cell switch method according to an embodiment of this application;
FIG. 4 is a flowchart 2 of a cell switch method according to an embodiment of this application;
FIG. 5 is a schematic diagram 1 of a structure of a cell switch apparatus according to an embodiment of this application;
FIG. 6 is a schematic diagram 2 of a structure of a cell switch apparatus according to an embodiment of this application;
FIG. 7 is a schematic diagram of a structure of a communication device according to an embodiment of this application;
FIG. 8 is a schematic diagram of a structure of a terminal according to an embodiment of this application; and
FIG. 9 is a schematic diagram of a structure of a network-side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

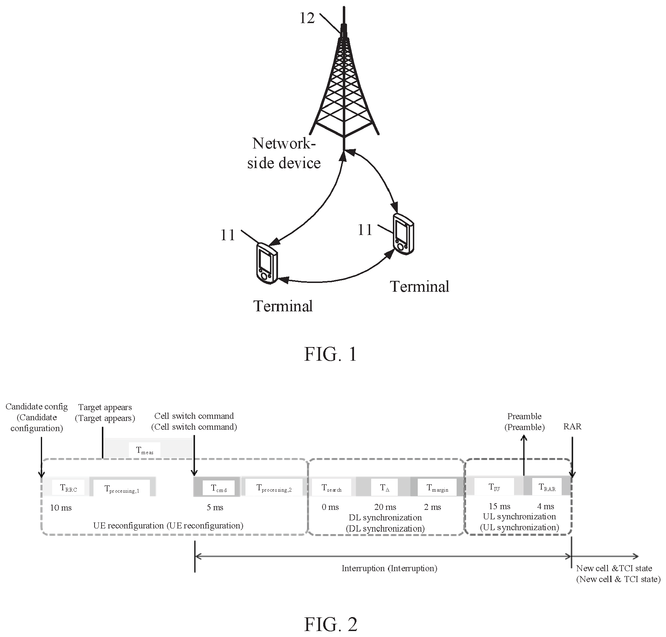

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. In addition to the foregoing terminal device, the terminal may alternatively be a chip in a terminal, such as a modem (Modem) chip or a system on chip (System on Chip, SoC). It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that a same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only the core network device in the NR system is used as an example for description, and a specific type of the core network device is not limited.

For ease of understanding, the following describes some content related to the embodiments of this application.

### 1. LTM switching process

As shown in FIG. 2, the LTM switching process is as follows:
(1) Radio resource control (Radio Resource Control, RRC) pre-configuration: A terminal receives pre-configuration information of a candidate cell that is delivered by a network-side device.
(2) Measurement reporting: The terminal obtains an L1 measurement result by measuring a reference signal (Reference Signal, RS) (for example, a synchronization signal block (Synchronization Signal Block, SSB)) of a current serving cell and a neighboring cell, and reports the L1 measurement result.
(3) Switch command: The terminal receives a cell switch command sent by the network-side device, and applies RRC configuration information of a target cell. LTM uses a medium access control (Medium Access Control, MAC) control element (Control Element, CE) as a carrier of the cell switch command.
(4) Downlink synchronization and automatic gain control (Automatic Gain Control, AGC) adjustment: The terminal performs, based on the first SSB of the target cell obtained after reconfiguration, channel estimation by using a PBCH DMRS to obtain channel information, then decodes data on a PBCH by using the channel information, to obtain a system frame number, a half-frame indication, and an SSB index (index), performs downlink synchronization at a frame level, a timeslot level, and a symbol level, and adjusts an automatic gain control AGC parameter based on received power of the SSB.
(5) Uplink synchronization: After downlink synchronization, the terminal performs uplink synchronization by using a random access channel (Random Access Channel, RACH). The uplink synchronization is completed after a random access response (Random Access Response, RAR) is received to obtain a TA.

### 2. Timing advance TA

In the LTM process, the TA is obtained in the uplink synchronization step. In a related technology, LTM supports RACH-less switch and RACH-based switch.

The RACH-less switch means that neither a network nor the terminal triggers a RACH procedure during switch. Uplink synchronization is implemented in three manners in the RACH-less switch solution. The first manner is an early (early) RACH manner. To be specific, to resolve a problem that a switch latency is large due to the RACH procedure, the following manner is introduced in LTM: Before a cell switch command is delivered, the terminal is triggered, by using a physical downlink control channel (Physical downlink control channel, PDCCH) order (order), to send a preamble to a candidate cell. After detecting the preamble and calculating a TA, the candidate cell sends the TA value to a source cell through a higher layer interface. The source cell notifies the terminal by using the cell switch command or a random access response (RAR). After receiving the cell switch command, the terminal sends uplink data based on the TA value corresponding to the target cell. The second manner is an LTE RACH-less manner, meaning that the TA value of the target cell is 0, or the TA value of the target cell is the same as a TA value of a serving cell. The third manner is UE-based TA measurement (UE-based TA measurement). To be specific, the terminal determines a TA value of the terminal at the target cell based on a downlink receiving time difference of the terminal between the target cell and the source cell and a TA value of the terminal at the source cell.

In contrast to RACH-less switch, RACH-based switch requires initiation of the RACH procedure during switch. In the related technology, LTM does not discuss details of RACH-based switch, for example, whether triggering is performed by the network or by user equipment (User Equipment, UE, namely, the terminal), or whether CFRA or CBRA is performed.

### 3. Beam indication mechanism

After conventional cell handover or initial access is completed, if the network does not configure a beam indication information list, or the network configures a beam indication information list and a quantity of pieces of beam indication information in the list is greater than 1 but the network does not activate the beam indication information, the terminal determines, based on an SSB associated with the latest physical random access channel (Physical Random Access Channel, PRACH) transmission or PRACH transmission initiated by initial access, a downlink receive beam to receive data, and uses an uplink transmit beam corresponding to the latest PRACH transmission or the PRACH transmission initiated by initial access to send data.

In LTM, only a unified TCI framework (unified TCI framework) is supported in the related technology, in other words, the same beam is used for an uplink and/or a downlink. In addition, in the related technology, it has been agreed that a cell switch command may carry one TCI state index (for a case that beam information corresponding to the target cell is configured as a joint TCI (joint TCI)) or a pair of uplink (Uplink, UL) and downlink (Downlink, DL) TCI state indexes (for a case that beam information corresponding to the target cell is configured as a separate TCI mode (separate TCI mode)), so that after being switched to the target cell, the terminal can perform data transmission by using a determined beam. However, there is no clear conclusion as to whether the beam indication information is always carried in the cell switch command.

With reference to the accompanying drawings, a cell switch method and apparatus, a terminal, and a network-side device provided in the embodiments of this application are described below in detail by using some embodiments and application scenarios thereof.

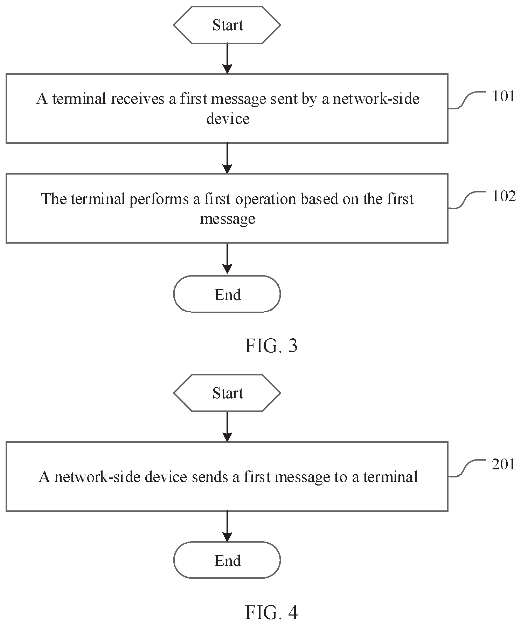

Referring to FIG. 3, FIG. 3 is a flowchart of a cell switch method according to an embodiment of this application. As shown in FIG. 3, the cell switch method includes the following steps.

Step 101: A terminal receives a first message sent by a network-side device, where the first message is used to trigger cell switch.

The first message may be a cell switch command (cell switch command). For example, the first message may be a cell switch command carried by a MAC CE, and the cell switch command may be an LTM switch command.

Step 102: The terminal performs a first operation based on the first message.

The performing a first operation includes any one of the following:
performing random access channel RACH-less cell switch in a case that the first message meets a first condition, where the first condition is a condition corresponding to RACH-less cell switch;
performing contention free random access CFRA-based cell switch in a case that the first message meets a second condition, where the second condition is a condition corresponding to CFRA-based cell switch; and
performing contention based random access CBRA-based cell switch in a case that the first message meets a third condition, where the third condition is a condition corresponding to CBRA-based cell switch.

In an implementation, the first message is a cell switch command, and the terminal performs the first operation after receiving the cell switch command. The cell switch command carries at least indication information of a target object, and the first operation includes but is not limited to at least one of the following: CBRA-based cell switch, CFRA-based cell switch, and RACH-less cell switch. The target object may include at least one of the following: a transmission reception point (TRP), a cell, a cell group, and a primary cell in a cell group.

In an implementation, the target object may be a target cell for cell switch.

In an implementation, the first message is a cell switch command, and the terminal performs RACH-less cell switch after the terminal receives a cell switch command that meets the first condition.

In an implementation, the first message is a cell switch command, and the terminal performs CFRA-based cell switch after the terminal receives a cell switch command that meets the second condition.

In an implementation, the first message is a cell switch command, and the terminal performs CBRA-based cell switch after the terminal receives a cell switch command that meets the third condition.

In this embodiment of this application, the terminal receives the first message sent by the network-side device, where the first message is used to trigger cell switch; and the terminal performs the first operation based on the first message, where the performing the first operation includes any one of the following: performing random access channel RACH-less cell switch in the case that the first message meets the first condition, where the first condition is a condition corresponding to RACH-less cell switch; performing contention free random access CFRA-based cell switch in the case that the first message meets the second condition, where the second condition is a condition corresponding to CFRA-based cell switch; and performing contention based random access CBRA-based cell switch in the case that the first message meets the third condition, where the third condition is a condition corresponding to CBRA-based cell switch. In this way, the terminal can perform corresponding cell switch based on a condition met by the first message used to trigger cell switch, so that flexibility in performing cell switch by the terminal can be improved.

Optionally, the first condition includes at least one of the following:
the first message carries timing advance TA information;
the first message carries beam indication information;
the first message carries indication information indicating RACH-less cell switch; and
the first message carries indication information indicating the target object, and the terminal is configured by the network-side device or is indicated by the network-side device to obtain a TA of the terminal at the target object based on a second operation, where
the first message carries the beam indication information, and in a case that beam information corresponding to the target object is configured as a joint TCI mode, the beam indication information may include one TCI state index, or in a case that beam information corresponding to the target object is configured as a separate TCI mode, the beam indication information may include a pair of UL and DL TCI state indexes.

That the first message carries indication information indicating RACH-less cell switch may include: the first message carries indication information indicating LTE RACH-less like cell switch, for example, TA=0 or a timing advance group (Timing Advance Group, TAG) identity (Identity document, id) of a source object (for example, a source cell). The source object may include at least one of the following: a transmission reception point (TRP), a cell, a cell group, and a primary cell in a cell group. In an implementation, the source object may be a source cell for cell switch.

It should be noted that the indication information indicating the target object may be indication information explicitly indicating the target object. For example, the indication information directly indicates the target object, for example, is a physical cell identifier (Physical cell identifier, PCI). Alternatively, the indication information indicating the target object may be indication information implicitly indicating the target object. The indication information indicates the target object, for example, is a configuration identifier of the target object. The terminal may determine configuration information of the target object based on the configuration identifier. The configuration information of the target object includes the physical cell identifier PCI. The target object may include at least one of the following: a transmission reception point (TRP), a cell, a cell group, and a primary cell in a cell group, and the target cell may be uniquely determined by using the target object.

The terminal is configured by the network-side device or is indicated by the network-side device to obtain the TA of the target object based on the second operation. The second operation may include: obtaining the TA of the terminal at the target object based on at least one of a downlink receiving time difference of the terminal between the source object and the target object, a timing difference between the source object and the target object, and TA indication information of the terminal at the source object. For example, the second operation may be a UE-based TA measurement operation, and the second operation may include: obtaining, by the terminal, the TA value of the terminal at the target object based on at least one of the receiving time difference of the terminal between the source object (for example, the source cell) and the target object (for example, the target cell), the timing difference between the source object (for example, the source cell) and the target object (for example, the target cell), and a TA command (command) MAC CE of the terminal at the source object (for example, the source cell). In the case of the timing difference between the source object (for example, the source cell) and the target object (for example, the target cell), the timing difference may be determined based on an absolute timing advance command (Timing Advance Command, TAC) sent by the network-side device after the terminal separately sends PRACH to the source object (for example, the source cell) and the target object (for example, the target cell).

In this implementation, the terminal can perform RACH-less cell switch based on the first condition met by the first message used to trigger cell switch, so that flexibility in performing cell switch by the terminal can be improved.

Optionally, the first condition further includes: the TA of the target object is valid.

It may be considered that the TA of the target object is valid when the TA of the target object meets at least one of the following conditions:
a TA timer (timer) does not expire;
the TA value does not exceed a preset threshold; and
the terminal updates the TA value within a preset time.

Optionally, the method further includes at least one of the following:
detecting or measuring, by the terminal, a reference signal corresponding to the beam indication information carried in the first message;
determining, by the terminal, a downlink receive beam based on the beam indication information carried in the first message, and receiving downlink data; and
determining, by the terminal, a target uplink resource based on the TA information carried in the first message and a first uplink resource, determining an uplink transmit beam based on the beam indication information carried in the first message, and sending uplink data on the target uplink resource based on the uplink transmit beam, where the first uplink resource is an uplink resource pre-configured or scheduled by a network.

It should be noted that before sending/receiving data based on the beam indication information carried in the first message, the terminal needs to detect or measure the reference signal corresponding to the beam indication information carried in the first message. The reference signal corresponding to the beam indication information is at least one of an SSB, a CSI-RS used for tracking, and a CSI-RS used for beam management. When a quasi co-location source reference signal of a TCI state indicating a downlink beam or a TCI state indicating an uplink beam and a downlink beam in the beam indication information is a CSI-RS used for tracking, and the terminal does not detect or measure the CSI-RS within a preset time, before transmitting or receiving data by using the downlink beam or the uplink beam and the downlink beam, the terminal needs to detect or measure the CSI-RS used for tracking. The same applies to the SSB and the CSI-RS used for beam management. When a TCI-UL-State indicating an uplink beam or a TCI state indicating an uplink beam and a downlink beam in the beam indication information is associated with a path loss reference signal, and the terminal does not detect or measure the path loss reference signal within a preset time, before transmitting or receiving data by using the uplink beam and the downlink beam, the terminal needs to detect or measure the path loss reference signal.

It should be noted that the operation of determining, by the terminal, a downlink receive beam based on the beam indication information carried in the first message, and receiving downlink data may be performed in a process in which the terminal performs RACH-less cell switch, or may be performed after the terminal performs RACH-less cell switch and before the terminal receives a command that is sent by the network-side device and that is used to update the beam indication information. This is not limited in this embodiment.

It should be noted that the operation of determining, by the terminal, a target uplink resource based on the TA information carried in the first message and a first uplink resource, determining an uplink transmit beam based on the beam indication information carried in the first message, and sending uplink data on the target uplink resource based on the uplink transmit beam may be performed in a process in which the terminal performs RACH-less cell switch, or may be performed after the terminal performs RACH-less cell switch and before the terminal receives a command that is sent by the network-side device and that is used to update the beam indication information or the TA. The TA and the beam information are decoupled from each other. To be specific, after receiving a command that is sent by the network-side device and that is used to update the TA, the terminal may still determine the uplink beam based on the beam indication information carried in the cell switch command, to send the data. After receiving a command that is sent by the network-side device and that is used to update the beam indication information, the terminal may still determine the target uplink resource based on the TA information carried in the cell switch command. This is not limited in this embodiment.

In an implementation, the first message is a cell switch command, and that the terminal performs RACH-less cell switch may include: after a first preset time after the terminal receives the cell switch command, determining, by the terminal, the downlink receive beam by using the beam indication information carried in the cell switch command, and receiving downlink data; and determining the target uplink resource by using the TA related information indicated in the cell switch command and the first uplink resource, determining the uplink transmit beam by using the beam indication information carried in the cell switch command, and sending the uplink data by using the target uplink resource, where the first uplink resource is an uplink resource pre-configured or scheduled by a network. Therefore, a resource location at which the terminal actually sends data can be determined based on a pre-configured (pre-configured) or network-scheduled (NW-scheduled) PUSCH resource and the TA value indicated in the cell switch command (Cell Switch Command, CSC).

In this implementation, the terminal detects or measures the reference signal corresponding to the beam indication information carried in the first message; the terminal determines the downlink receive beam based on the beam indication information carried in the first message, and receives the downlink data; and the terminal determines the target uplink resource based on the TA information carried in the first message and the first uplink resource, determines the uplink transmit beam based on the beam indication information carried in the first message, and sends the uplink data on the target uplink resource based on the uplink transmit beam, where the first uplink resource is an uplink resource pre-configured or scheduled by the network. In this way, the terminal can determine, based on the TA information carried in the first message and the first uplink resource, the resource location at which the terminal actually sends data.

Optionally, the second condition includes at least one of the following:
the first message does not carry TA information;
the first message carries beam indication information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object includes CFRA resource configuration information; and
the first message carries RACH resource indication information.

It may be considered that the TA of the target object is invalid when the TA of the target object meets the following conditions:
a TA timer (timer) expires;
the TA value exceeds a preset threshold; and
the terminal does not update the TA value within a preset time.

In an implementation, a value of a preamble index is not 0 in a case that the first message carries the RACH resource indication information.

That the first message does not carry indication information indicating RACH-less cell switch may include: the first message does not carry indication information indicating LTE RACH-less like cell switch, for example, TA=0 or a TAG id of the source object.

The first message carries the RACH resource indication information, and the RACH resource indication information may include at least one of the following: an identifier of the target object, a reference signal index, a preamble index (Preamble index), and a preamble mask index (Preamble Mask index).

The second operation may include: obtaining the TA of the terminal at the target object based on at least one of a downlink receiving time difference of the terminal between the source object and the target object, a timing difference between the source object and the target object, and TA indication information of the terminal at the source object. For example, the second operation may be a UE-based TA measurement operation, and the second operation may include: obtaining, by the terminal, the TA value of the terminal at the target object based on at least one of the receiving time difference of the terminal between the source object (for example, the source cell) and the target object (for example, the target cell), the timing difference between the source object (for example, the source cell) and the target object (for example, the target cell), and a TA command (command) MAC CE of the terminal at the source object (for example, the source cell). In the case of the timing difference between the source object (for example, the source cell) and the target object (for example, the target cell), the timing difference may be determined based on an absolute TAC sent by the network-side device after the terminal separately sends PRACH to the source object (for example, the source cell) and the target object (for example, the target cell).

In this implementation, the terminal can perform CFRA-based cell switch based on the second condition met by the first message used to trigger cell switch, so that flexibility in performing cell switch by the terminal can be improved.

Optionally, the RACH resource indication information includes at least one of the following:
an identifier of the target object, a reference signal index, a preamble index, and a preamble mask index.

The reference signal index may be an RS identifier.

Optionally, the method further includes at least one of the following:
determining, by the terminal, a target RACH resource based on the beam indication information carried in the first message, and sending a preamble on the target RACH resource; and after a RACH procedure ends, determining, by the terminal based on the beam indication information carried in the first message, an uplink beam or a downlink beam used for data transmission; and
performing, by the terminal, a RACH procedure based on a CFRA resource indicated in the pre-configuration information corresponding to the target object indicated in the first message; and if the first message carries the beam indication information, not using, by the terminal, a beam corresponding to the beam indication information to perform data transmission.

In an implementation, the determining, based on the beam indication information carried in the first message, an uplink beam or a downlink beam used for data transmission may include: determining, based on the beam indication information carried in the first message, the uplink beam used for data transmission; or determining, based on the beam indication information carried in the first message, the downlink beam used for data transmission; or determining, based on the beam indication information carried in the first message, the uplink beam and the downlink beam that are used for data transmission.

It should be noted that the operation of determining, by the terminal, a target RACH resource based on the beam indication information carried in the first message, and sending a preamble on the target RACH resource; and after a RACH procedure ends, determining, by the terminal based on the beam indication information carried in the first message, an uplink beam or a downlink beam used for data transmission may be performed in a process in which the terminal performs CFRA-based cell switch, or may be performed after the terminal performs CFRA-based cell switch and before the terminal receives a command that is sent by the network-side device and that is used to update the beam indication information. This is not limited in this embodiment.

In a case that the operation of performing, by the terminal, a RACH procedure based on a CFRA resource indicated in the pre-configuration information corresponding to the target object indicated in the first message is performed in the process in which the terminal performs CFRA-based cell switch, the terminal does not use the beam corresponding to the beam indication information carried in the first message to perform data transmission.

In an implementation, the first message is a cell switch command, and that the terminal performs CFRA-based cell switch includes at least one of the following operations:
after a second preset time after the terminal receives the cell switch command, sending, by the terminal, the preamble on the target RACH resource determined based on the beam indication information carried in the cell switch command; and after the RACH procedure ends, determining, by the terminal, the uplink beam and the downlink beam by using the beam indication information carried in the cell switch command, and performing subsequent data sending/receiving; and
after a third preset time after the terminal receives the cell switch command, performing, by the terminal, the RACH procedure based on the CFRA resource indicated in the pre-configuration information corresponding to the target object indicated in the cell switch command, in other words, using a CFRA procedure of legacy cell switch, where in the RACH procedure, the terminal needs to perform beam measurement and selection, and in this case, if the cell switch command carries the beam indication information, the terminal does not use the uplink beam and the downlink beam corresponding to the beam indication information to send/receive data.

It should be noted that in RACH-based switch in the RACH procedure performed based on the CFRA resource indicated in the pre-configuration information corresponding to the target object, the terminal actually performs one time of beam measurement and selection in the RACH procedure. It is assumed that a beam selected in the RACH procedure is different from the beam indicated in the cell switch command, for example, when the terminal moves, a new beam is selected based on the RACH procedure, and real-time performance of the new beam is better than real-time performance of the beam indicated in the cell switch command. After the RACH procedure ends (in other words, switch is completed), if the terminal uses the beam information indicated in the cell switch command, data receiving performance may be greatly reduced, and even data cannot be correctly received.

In this embodiment of this application, the terminal performs the RACH procedure based on the CFRA resource indicated in the pre-configuration information corresponding to the target object indicated in the first message. If the first message carries the beam indication information, the terminal does not use the beam corresponding to the beam indication information to perform data transmission, but uses the new beam selected in the RACH procedure to perform data transmission, thereby improving a probability of successfully performing data transmission by the terminal.

Optionally, the third condition includes at least one of the following:
the first message does not carry TA information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object does not include CFRA resource configuration information;
the first message does not carry RACH resource indication information;
the first message carries RACH resource indication information, where the RACH resource indication information does not include a preamble index, or a value of a preamble index is 0; and
the first message carries indication information indicating a target object, and pre-configuration information corresponding to the target object includes configuration information of a common RACH resource.

That the first message does not carry indication information indicating RACH-less cell switch may include: the first message does not carry indication information indicating LTE RACH-less like cell switch, for example, TA=0 or a TAG id of the source object.

The second operation may include: obtaining the TA of the terminal at the target object based on at least one of a downlink receiving time difference of the terminal between the source object and the target object, a timing difference between the source object and the target object, and TA indication information of the terminal at the source object. For example, the second operation may be a UE-based TA measurement operation, and the second operation may include: obtaining, by the terminal, the TA value of the terminal at the target object based on at least one of the receiving time difference of the terminal between the source object (for example, the source cell) and the target object (for example, the target cell), the timing difference between the source object (for example, the source cell) and the target object (for example, the target cell), and a TA command (command) MAC CE of the terminal at the source object (for example, the source cell). In the case of the timing difference between the source object (for example, the source cell) and the target object (for example, the target cell), the timing difference may be determined based on an absolute TAC sent by the network-side device after the terminal separately sends PRACH to the source object (for example, the source cell) and the target object (for example, the target cell).

It may be considered that the TA of the target object is invalid when the TA of the target object meets the following conditions:
a TA timer (timer) expires;
the TA value exceeds a preset threshold; and
the terminal does not update the TA value within a preset time.

The first message carries the RACH resource indication information, and the RACH resource indication information may include at least one of the following: an identifier of the target object, a reference signal index, a preamble index (Preamble index), and a preamble mask index (Preamble Mask index).

In this implementation, the terminal can perform CBRA-based cell switch based on the third condition met by the first message used to trigger cell switch, so that flexibility in performing cell switch by the terminal can be improved.

Optionally, the second operation includes:
obtaining the TA of the terminal at the target object based on at least one of a downlink receiving time difference of the terminal between the source object and the target object, a timing difference between the source object and the target object, and TA indication information of the terminal at the source object.

Optionally, the method further includes at least one of the following:
determining, by the terminal, the target RACH resource based on at least one of the configuration information that is of the common RACH resource and that is included in the pre-configuration information corresponding to the target object indicated in the first message and the RACH resource indication information carried in the first message, and performing the RACH procedure; and
not using, by the terminal in a case that the first message carries the beam indication information, the beam corresponding to the beam indication information to perform data transmission.

It should be noted that the terminal determines the target RACH resource based on at least one of the configuration information that is of the common RACH resource and that is included in the pre-configuration information corresponding to the target object indicated in the first message and the RACH resource indication information carried in the first message, and performing the RACH procedure.

It should be noted that when the terminal performs the RACH procedure, the terminal does not use the beam corresponding to the beam indication information carried in the first message to perform data transmission; or after the terminal performs the RACH procedure, the terminal does not use the beam corresponding to the beam indication information carried in the first message to perform data transmission.

In an implementation, the first message is a cell switch command, and that the terminal performs CBRA-based cell switch includes: after a fourth preset time after the terminal receives the cell switch command, performing, by the terminal, the RACH procedure, namely, a CBRA procedure, based on the common RACH resource indicated in the pre-configuration information corresponding to the target object indicated in the cell switch command. In the CBRA procedure, the terminal needs to perform beam measurement and selection. If the cell switch command carries the beam indication information, the terminal does not use the uplink beam and the downlink beam corresponding to the beam indication information to send/receive data.

It should be noted that for RACH-based switch (specifically CBRA-based cell switch), the terminal actually performs one time of beam measurement and selection in the RACH procedure. It is assumed that a beam selected in the RACH procedure is different from the beam indicated in the cell switch command, for example, when the terminal moves, a new beam is selected based on the RACH procedure, and real-time performance of the new beam is better than real-time performance of the beam indicated in the cell switch command. After the RACH procedure ends (in other words, switch is completed), if the terminal uses the beam information indicated in the cell switch command, data receiving performance may be greatly reduced, and even data cannot be correctly received.

In this embodiment of this application, in the case that the first message carries the beam indication information, the terminal does not use the beam corresponding to the beam indication information to perform data transmission, but uses the new beam selected in the RACH procedure to perform data transmission, thereby improving a probability of successfully performing data transmission by the terminal.

Optionally, the not using, by the terminal in a case that the first message carries the beam indication information, the beam corresponding to the beam indication information to perform data transmission includes:
not detecting or measuring, by the terminal, the reference signal corresponding to the beam indication information.

It should be noted that the reference signal corresponding to the beam indication information is at least one of an SSB, a CSI-RS used for tracking, a CSI-RS used for beam management, and a path loss reference signal.

Referring to FIG. 4, FIG. 4 is a flowchart of a cell switch method according to an embodiment of this application. As shown in FIG. 4, the cell switch method includes the following steps.

Step 201: A network-side device sends a first message to a terminal, where the first message is used to indicate to perform a first operation.

That the first message is used to indicate to perform a first operation includes any one of the following:
in a case that the first message meets a first condition, the first message is used to indicate to perform RACH-less cell switch, where the first condition is a condition corresponding to RACH-less cell switch;
in a case that the first message meets a second condition, the first message is used to indicate to perform contention free random access CFRA-based cell switch, where the second condition is a condition corresponding to CFRA-based cell switch; and
in a case that the first message meets a third condition, the first message is used to indicate to perform contention based random access CBRA-based cell switch, where the third condition is a condition corresponding to CBRA-based cell switch.

Optionally, the first message carries beam indication information in a case that the first message meets a fourth condition, where
the fourth condition includes at least one of the following:
the first message carries TA information;
the first message carries indication information indicating RACH-less cell switch; and
the first message carries indication information indicating a target object, and the terminal is configured by the network-side device or is indicated by the network-side device to obtain a TA of the target object based on a second operation.

Optionally, the first message carries RACH resource indication information; and
the first message carries indication information indicating a target object, and pre-configuration information corresponding to the target object includes CFRA resource configuration information.

In an implementation, a value of a preamble index is not 0 in a case that the first message carries the RACH resource indication information.

In an implementation, the first message is a cell switch command, and the network-side device sends the cell switch command to the terminal. The cell switch command carries the beam indication information when the fourth condition is met.

In a related technology, LTM supports a RACH-based switch manner and a RACH-less switch manner. A network sends a cell switch command using a MAC CE as a carrier, to trigger a terminal to perform cell switch. The cell switch command may include information such as a target object configuration index. For example, for RACH-based switch (specifically CBRA-based switch), the terminal actually performs one time of beam measurement and selection in the RACH procedure. It is assumed that a beam selected in a RACH procedure is different from a beam indicated in the cell switch command, for example, when the terminal moves, a new beam is selected based on the RACH procedure, and real-time performance of the new beam is better than real-time performance of the beam indicated in the cell switch command. After the RACH procedure ends (in other words, switch is completed), if the terminal uses the beam information indicated in the cell switch command, data receiving performance may be greatly reduced, and even data cannot be correctly received. In the embodiments of this application, in different cell switch scenarios, a network-side device determines content carried in a cell switch command, and a terminal performs a corresponding behavior after receiving the corresponding cell switch command, so that a success rate of performing cell switch by the terminal and reliability of data transmission after cell switch can be improved.

The following describes, by using several specific embodiments, the cell switch method provided in the embodiments of this application.

### Embodiment 1:

This embodiment is used for RACH-less switch (RACH-less Switch), namely, RACH-less cell switch.

Step (11): A network-side device sends a cell switch command, where the cell switch command includes an identifier of a target object, beam indication information, and first indication information, and the first indication information is at least one of the following: a TA value (including TA=0) of the terminal at the target object; and a TAG id of a source object.

When the following condition is met, am indication field corresponding to the first indication information may be ignored or omitted:
a terminal is configured by the network or is indicated by the network to obtain, based on a second operation (for example, UE-based TA measurement), the TA that is of the target object and that is indicated in the cell switch command. Optionally, the TA of the target object is valid, and the second operation is: obtaining, by the terminal, the TA value of the terminal at the target object based on at least one of a receiving time difference of the terminal between the source object (for example, a source cell) and the target object (for example, a target cell), a timing difference between the source object (for example, the source cell) and the target object (for example, the target cell), and a TA command (command) MAC CE of the terminal at the source object (for example, the source cell). In the case of the timing difference between the source object (for example, the source cell) and the target object (for example, the target cell), the timing difference may be determined based on an absolute TAC sent by the network-side device after the terminal separately sends PRACH to the source object (for example, the source cell) and the target object (for example, the target cell).

Step (12): The terminal receives the cell switch command, and after a first preset time after the terminal receives the cell switch command, the terminal determines a downlink receive beam by using the beam indication information carried in the cell switch command, determines a target uplink resource by using TA related information indicated in the cell switch command and a first uplink resource, determines an uplink transmit beam by using the beam indication information carried in the cell switch command, and sends uplink data on the target uplink resource, where the first uplink resource is an uplink resource pre-configured or scheduled by the network. A length of the first preset time is configured by the network or specified in a protocol, and includes but is not limited to at least one of the following: a beam effective time, a radio frequency (Radio Frequency, RF) retuning (retuning) time, and a cell switch time (for example, an effective time of an RRC configuration of the target object).

### Embodiment 2:

This embodiment is used for CFRA-based switch (CFRA-based Switch), namely, CFRA-based cell switch.

Step (21): A network-side device sends a cell switch command, where the cell switch command includes:
Case-1: an identifier of a target object and beam indication information; or
Case-2: an identifier of a target object, an SSB index (index) or a CSI reference signal (CSI Reference Signal, CSI-RS) resource identifier (resource Id), a preamble index, and a preamble mask index; or
Case-3: an identifier of a target object.

Step (22): A terminal receives the cell switch command, and performs a corresponding first operation (Case-1 in step (21) corresponds to the following Case 1-1 and Case 1-2, and there is a one-to-one correspondence for other cases):
Case 1-1: The terminal side determines a target RACH resource based on a source reference signal (a reference signal associated with a downlink beam) corresponding to the beam indication information and a CFRA resource configuration associated with the target object, and sends a preamble on the target RACH resource for the first time, where the preamble is configured by the network-side device; and detects an RAR in an RAR window after sending the preamble. If the RAR is detected, a RACH procedure ends. Otherwise, the terminal side performs PRACH retransmission until a quantity of PRACH transmission times reaches a maximum quantity of times configured by the network-side device. In addition, regardless of the first PRACH transmission or PRACH retransmission, an RS associated with the target RACH resource on the terminal side remains unchanged, in other words, an associated downlink beam remains unchanged. After the RACH procedure ends, the terminal determines an uplink beam and a downlink beam by using the beam indication information carried in the cell switch command, and performs subsequent data sending/receiving.

Case 1-2: The terminal side determines a target RACH resource based on a source reference signal (a reference signal associated with a downlink beam) corresponding to the beam indication information and a CFRA resource configuration associated with the target object, and sends a target preamble on the target RACH resource for the first time, where the target preamble is configured by the network-side device; and detects an RAR in an RAR window after sending the preamble. If the RAR is detected, a RACH procedure ends. Otherwise, the terminal side reselects an RS or a resource to perform PRACH retransmission until a quantity of PRACH transmission times reaches a maximum quantity of times configured by the network-side device. An RS, a RACH occasion, and a preamble that correspond to the PRACH retransmission may be different from those in the first PRACH transmission. In the entire RACH procedure and after the RACH procedure succeeds, the terminal does not determine, by using the beam indication information carried in the cell switch command, an uplink beam and a downlink beam to perform subsequent data sending/receiving.

In a case that the cell switch command includes the identifier of the target object and the beam indication information, and pre-configuration information corresponding to the target object includes CFRA resource configuration information, the terminal performs Case 1-1 or Case 1-2 in this embodiment.

Case-2: The terminal determines a target RACH resource based on an SSB index or a CSI-RS resource Id carried in the cell switch command and a RACH resource configuration associated with the target object, and sends a target preamble on the target RACH resource, where the target preamble is determined by using a preamble index indication carried in the cell switch command. Before a third operation, The terminal determines an uplink beam and a downlink beam based on an SSB index or a CSI-RS resource Id carried in the cell switch command, and performs subsequent data sending/receiving. The third operation includes at least one of the following:
The terminal receives beam related configuration information corresponding to the target object, or beam related configuration information corresponding to the target object takes effect. Optionally, the beam related configuration information corresponding to the target object includes only one piece of beam information, namely, a TCI state or a TCI-UL-State.

The terminal receives a command used to activate a TCI state and/or a TCI-UL-State associated with the target object, or a TCI state and/or a TCI-UL-State associated with the target object is activated.

The terminal receives a command used to indicate a TCI state and/or a TCI-UL-State associated with the target object, or a TCI state and/or a TCI-UL-State associated with the target object takes effect.

In a case that the cell switch command includes the identifier of the target object, the SSB index or the CSI-RS resource Id, a preamble index, and a preamble mask index, and pre-configuration information corresponding to the target object includes CFRA resource configuration information, the terminal performs Case-2 in this embodiment.

Case-3: The terminal side performs beam measurement and selection based on CFRA resource configuration information associated with the target object, selects a CSI-RS or an SSB whose measurement value is greater than a specific threshold, determines a target RACH resource based on the selected CSI-RS or SSB, and performs the first PRACH transmission on the target RACH resource. The terminal detects an RAR in an RAR window after sending a preamble. If the RAR is detected, a RACH procedure ends. Otherwise, the terminal reselects an RS or a RACH resource to perform PRACH retransmission until a quantity of PRACH transmission times reaches a maximum quantity of times configured by the network-side device. After the RACH procedure succeeds, before a fourth operation, the terminal performs subsequent data sending/receiving based on an uplink beam and a downlink beam determined in the RACH procedure. The fourth operation includes at least one of the following:
The terminal receives beam related configuration information corresponding to the target object, or beam related configuration information corresponding to the target object takes effect. Optionally, the beam related configuration information corresponding to the target object includes only one piece of beam information, namely, a TCI state or a TCI-UL-State.

The terminal receives a command used to activate a TCI state and/or a TCI-UL-State associated with the target object, or a TCI state and/or a TCI-UL-State associated with the target object is activated.

The terminal receives a command used to indicate a TCI state and/or a TCI-UL-State associated with the target object, or a TCI state and/or a TCI-UL-State associated with the target object takes effect.

In a case that the cell switch command includes the identifier of the target object, and pre-configuration information corresponding to the target object includes CFRA resource configuration information, the terminal performs Case-3 in this embodiment.

### Embodiment 3:

This embodiment is used for CBRA-based switch (CBRA-based Switch), namely, CBRA-based cell switch.

Step (31): A network-side device sends a cell switch command, where the cell switch command includes:
Case-1: an identifier of a target object and beam indication information; or
Case-2: an identifier of a target object.

Step (32): A terminal receives the cell switch command, and performs a corresponding first operation (Case-1 in step (31) corresponds to Case 1-1 and Case 1-2 in this embodiment, and there is a one-to-one correspondence for other cases):
Case 1-1: The terminal determines a target RACH resource based on a source reference signal (a reference signal associated with a downlink beam) corresponding to the beam indication information and a configuration that is of a common RACH resource and that is associated with the target object, and sends a target preamble on the target RACH resource for the first time, where the target preamble is configured by the network-side device; and detects an RAR in an RAR window after sending the preamble. If the RAR is detected, a RACH procedure ends. Otherwise, the terminal side reselects an RS or a RACH resource to perform PRACH retransmission until a quantity of PRACH transmission times reaches a maximum quantity of times configured by the network-side device. In addition, regardless of the first PRACH transmission or PRACH retransmission, an RS associated with the target RACH resource remains unchanged, in other words, a downlink beam remains unchanged. After the RACH procedure ends, the terminal determines an uplink beam and a downlink beam by using the beam indication information carried in the cell switch command, and performs subsequent data sending/receiving.

Case 1-2: The terminal determines a target RACH resource based on a source reference signal (a reference signal associated with a downlink beam) corresponding to the beam indication information and a configuration that is of a common RACH resource and that is associated with the target object, and sends a target preamble on the target RACH resource for the first time, where the target preamble is configured by the network-side device; and detects an RAR in an RAR window after sending the preamble. If the RAR is detected, a RACH procedure ends. Otherwise, the terminal side reselects an RS or a RACH resource to perform PRACH retransmission until a quantity of PRACH transmission times reaches a maximum quantity of times configured by the network-side device. In the PRACH retransmission process and after the RACH procedure succeeds, the terminal does not determine, by using the beam indication information carried in the cell switch command, an uplink beam and a downlink beam to perform subsequent data sending/receiving.

In a case that the cell switch command includes the identifier of the target object and the beam indication information, and pre-configuration information corresponding to the target object includes CBRA resource configuration information, the terminal performs Case 1-1 or Case 1-2 in this embodiment.

Case-2: The terminal performs beam measurement and selection based on configuration information that is of a common RACH resource and that is associated with the target object, selects a CSI-RS or an SSB whose measurement value is greater than a specific threshold, determines a target RACH resource based on the selected CSI-RS or SSB, and performs the first PRACH transmission on the target RACH resource. The terminal detects an RAR in an RAR window after sending a preamble. If the RAR is detected, a RACH procedure ends. Otherwise, the terminal reselects an RS or a RACH resource to perform PRACH retransmission until a quantity of PRACH transmission times reaches a maximum quantity of times configured by the network-side device. After the RACH procedure succeeds, before a fifth operation, the terminal performs subsequent data sending/receiving based on an uplink beam and a downlink beam determined in the RACH procedure. The fifth operation includes at least one of the following:
The terminal receives beam related configuration information corresponding to the target object, or beam related configuration information corresponding to the target object takes effect. Optionally, the beam related configuration information corresponding to the target object includes only one piece of beam information, namely, a TCI state or a TCI-UL-State.

The terminal receives a command used to activate a TCI state and/or a TCI-UL-State associated with the target object, or a TCI state and/or a TCI-UL-State associated with the target object is activated.

The terminal receives a command used to indicate a TCI state and/or a TCI-UL-State associated with the target object, or a TCI state and/or a TCI-UL-State associated with the target object takes effect.

In a case that the cell switch command includes the identifier of the target object, and pre-configuration information corresponding to the target object includes CBRA resource configuration information, the terminal performs Case-2 in this embodiment.

It should be noted that for a high-speed moving scenario, to reduce a switch latency, Release 18 introduces L1/L2 triggered mobility (LTM for short). In a related technology, LTM supports a RACH-based switch manner and a RACH-less switch manner. A network sends a cell switch command using a MAC CE as a carrier, to trigger a terminal to perform cell switch. The cell switch command may include a target cell configuration index, TA indication information, beam indication information, and the like. However, whether the foregoing content always occurs in the cell switch command, how the cell switch command indicates the terminal to perform RACH-less or RACH-based switch, whether the terminal uses, after RACH-based switch, a beam indicated in the cell switch command to send/receive data, and the like are not discussed or resolved.

An embodiment of this application implements a cell switch indication method, to ensure that a terminal can perform a correct cell switch operation after receiving a cell switch command. For example, the terminal performs CBRA after receiving the cell switch command, and after completing switch, the terminal does not send/receive data or a signal based on a TCI state indicated in the switch command. The terminal performs CBRA after receiving the cell switch command, and the terminal does not expect that the cell switch command carries a TCI state id. When the cell switch command does not carry TA indication information, and the terminal receives indication information that meets the following condition, the terminal performs CFRA; otherwise, the terminal performs CBRA. The condition includes: the cell switch command carries the TCI state id; or the condition includes: pre-configuration information of the target object includes CFRA configuration information.

It should be noted that this embodiment is used as an implementation of the network-side device corresponding to the embodiment shown in FIG. 3. For a specific implementation thereof, refer to related descriptions of the embodiment shown in FIG. 3. To avoid repetition, details are not described in this embodiment.

The cell switch method provided in the embodiments of this application may be performed by a cell switch apparatus. In the embodiments of this application, an example in which the cell switch apparatus performs the cell switch method is used to describe the cell switch apparatus provided in the embodiments of this application.

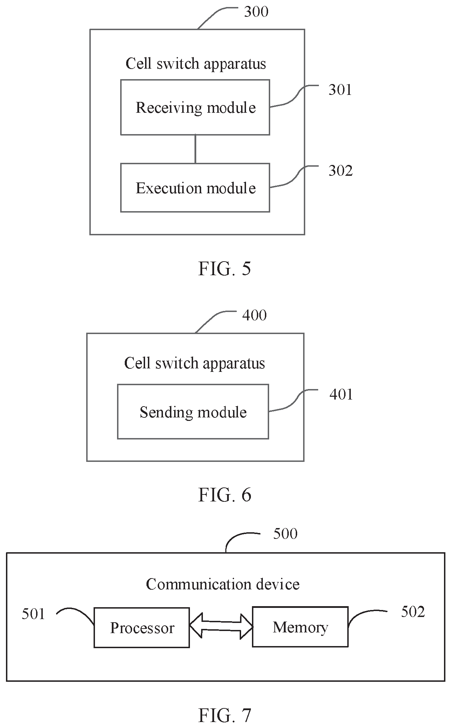

Referring to FIG. 5, FIG. 5 is a diagram of a structure of a cell switch apparatus according to an embodiment of this application. A terminal includes the cell switch apparatus. As shown in FIG. 5, the cell switch apparatus 300 includes:
a receiving module 301, configured to receive a first message sent by a network-side device, where the first message is used to trigger cell switch; and
an execution module 302, configured to perform a first operation based on the first message, where
the performing a first operation includes any one of the following:
   performing random access channel RACH-less cell switch in a case that the first message meets a first condition, where the first condition is a condition corresponding to RACH-less cell switch;
   performing contention free random access CFRA-based cell switch in a case that the first message meets a second condition, where the second condition is a condition corresponding to CFRA-based cell switch; and
   performing contention based random access CBRA-based cell switch in a case that the first message meets a third condition, where the third condition is a condition corresponding to CBRA-based cell switch.

Optionally, the first condition includes at least one of the following:
the first message carries timing advance TA information;
the first message carries beam indication information;
the first message carries indication information indicating RACH-less cell switch; and
the first message carries indication information indicating a target object, and the terminal is configured by the network-side device or is indicated by the network-side device to obtain a TA of the target object based on a second operation.

Optionally, the first condition further includes: the TA of the target object is valid.

Optionally, the apparatus further includes a first processing module, and the first processing module is used for at least one of the following:
detecting or measuring a reference signal corresponding to the beam indication information carried in the first message;
determining a downlink receive beam based on the beam indication information carried in the first message, and receiving downlink data; and
determining a target uplink resource based on the TA information carried in the first message and a first uplink resource, determining an uplink transmit beam based on the beam indication information carried in the first message, and sending uplink data on the target uplink resource based on the uplink transmit beam, where the first uplink resource is an uplink resource pre-configured or scheduled by a network.

Optionally, the second condition includes at least one of the following:
the first message does not carry TA information;
the first message carries beam indication information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object includes CFRA resource configuration information; and
the first message carries RACH resource indication information.

Optionally, the RACH resource indication information includes at least one of the following:
an identifier of the target object, a reference signal index, a preamble index, and a preamble mask index.

Optionally, the apparatus further includes a second processing module, and the second processing module is used for at least one of the following:
determining a target RACH resource based on the beam indication information carried in the first message, and sending a preamble on the target RACH resource; and after a RACH procedure ends, determining, by the terminal based on the beam indication information carried in the first message, an uplink beam or a downlink beam used for data transmission; and
performing a RACH procedure based on a CFRA resource indicated in the pre-configuration information corresponding to the target object indicated in the first message; and if the first message carries the beam indication information, not using, by the terminal, a beam corresponding to the beam indication information to perform data transmission.

Optionally, the third condition includes at least one of the following:
the first message does not carry TA information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object does not include CFRA resource configuration information;
the first message does not carry RACH resource indication information;
the first message carries RACH resource indication information, where the RACH resource indication information does not include a preamble index, or a value of a preamble index is 0; and
the first message carries indication information indicating a target object, and pre-configuration information corresponding to the target object includes configuration information of a common RACH resource.

Optionally, the second operation includes:
obtaining the TA of the terminal at the target object based on at least one of a downlink receiving time difference of the terminal between a source object and the target object, TA indication information of the terminal at the source object, and a timing difference between the source object and the target object.

Optionally, the apparatus further includes a third processing module, and the third processing module is used for at least one of the following:
determining the target RACH resource based on at least one of the configuration information that is of the common RACH resource and that is included in the pre-configuration information corresponding to the target object indicated in the first message and the RACH resource indication information carried in the first message, and performing the RACH procedure; and
not using, by the terminal in a case that the first message carries the beam indication information, the beam corresponding to the beam indication information to perform data transmission.

Optionally, the not using, by the terminal in a case that the first message carries the beam indication information, the beam corresponding to the beam indication information to perform data transmission includes:
not detecting or measuring, by the terminal, the reference signal corresponding to the beam indication information. The cell switch apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The cell switch apparatus provided in this embodiment of this application can implement the processes implemented in the method embodiment of FIG. 3, and achieve same technical effects. To avoid repetition, details are not described herein again.

Referring to FIG. 6, FIG. 6 is a diagram of a structure of a cell switch apparatus according to an embodiment of this application. A network-side device includes the cell switch apparatus. As shown in FIG. 6, the cell switch apparatus 400 includes:
a sending module 401, configured to send a first message to a terminal, where the first message is used to indicate to perform a first operation, where
that the first message is used to indicate to perform a first operation includes any one of the following:
   in a case that the first message meets a first condition, the first message is used to indicate to perform RACH-less cell switch, where the first condition is a condition corresponding to RACH-less cell switch;
   in a case that the first message meets a second condition, the first message is used to indicate to perform contention free random access CFRA-based cell switch, where the second condition is a condition corresponding to CFRA-based cell switch; and
   in a case that the first message meets a third condition, the first message is used to indicate to perform contention based random access CBRA-based cell switch, where the third condition is a condition corresponding to CBRA-based cell switch.

Optionally, the first message carries beam indication information in a case that the first message meets a fourth condition, where
the fourth condition includes at least one of the following:
the first message carries TA information;
the first message carries indication information indicating RACH-less cell switch; and
the first message carries indication information indicating a target object, and the terminal is configured by the network-side device or is indicated by the network-side device to obtain a TA of the target object based on a second operation.

Optionally, the first message carries RACH resource indication information; and
the first message carries indication information indicating a target object, and pre-configuration information corresponding to the target object includes CFRA resource configuration information.

The cell switch apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The cell switch apparatus provided in this embodiment of this application can implement the processes implemented in the method embodiment of FIG. 4, and achieve same technical effects. To avoid repetition, details are not described herein again.

Optionally, as shown in FIG. 7, an embodiment of this application further provides a communication device 500, including a processor 501 and a memory 502. The memory 502 stores a program or instructions capable of running on the processor 501. For example, when the communication device 500 is a terminal, the steps of the foregoing cell switch method embodiment applied to the terminal are implemented when the program or the instructions are executed by the processor 501, and same technical effects can be achieved. To avoid repetition, details are not described herein again. When the communication device 500 is a network-side device, the steps of the foregoing cell switch method embodiment applied to the network-side device are implemented when the program or the instructions are executed by the processor 501, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps of the method embodiment shown in FIG. 3. The terminal embodiment corresponds to the foregoing terminal-side method embodiment. Each implementing process and implementation of the foregoing method embodiment are applicable to the terminal embodiment, and same technical effects can be achieved.

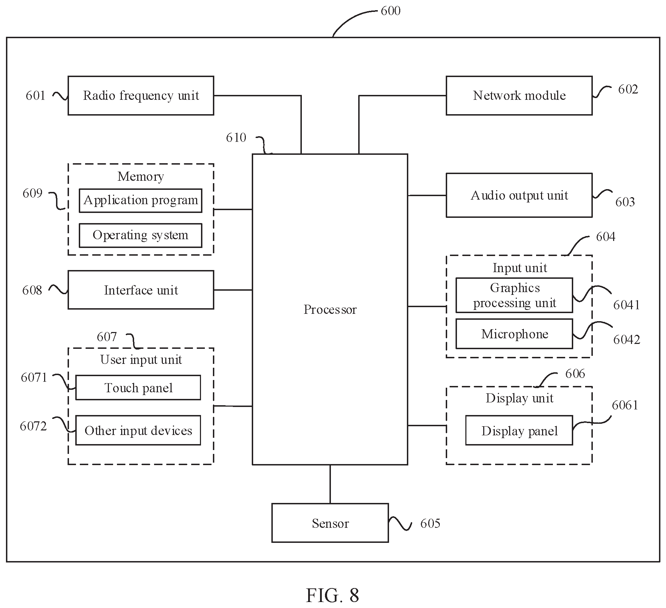

Specifically, FIG. 8 is a schematic diagram of a hardware structure of a terminal for implementing an embodiment of this application.

The terminal 600 includes but is not limited to at least some components in a radio frequency unit 601, a network module 602, an audio output unit 603, an input unit 604, a sensor 605, a display unit 606, a user input unit 607, an interface unit 608, a memory 609, a processor 610, and the like.

A person skilled in the art may understand that the terminal 600 may further include a power supply (for example, a battery) that supplies power to each component. The power supply may be logically connected to the processor 610 by using a power management system, so as to implement functions such as charging management, discharging management, and power consumption management by using the power management system. The structure of the terminal shown in FIG. 8 does not constitute a limitation on the terminal. The terminal may include more or fewer components than those shown in the figure, or combine some components, or have different component arrangements. Details are not described herein again.

It should be understood that in this embodiment of this application, the input unit 604 may include a graphics processing unit (Graphics Processing Unit, GPU) 6041 and a microphone 6042, and the GPU 6041 processes image data of a still picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Generally, the radio frequency unit 601 includes but is not limited to an antenna, an amplifier, a transceiver, a coupler, a low-noise amplifier, a duplexer, and the like.

The memory 609 may be configured to store a software program or instructions and various types of data. The memory 609 may mainly include a first storage area for storing a program or instructions and a second storage area for storing data. The first storage area may store an operating system, an application program or instructions required by at least one function (for example, a sound playing function or an image playing function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 may include one or more processing units. Optionally, the processor 610 integrates an application processor and a modem processor. The application processor mainly processes operations related to an operating system, a user interface, an application program, and the like. The modem processor mainly processes a wireless communication signal, such as a baseband processor. It may be understood that the modem processor may not be integrated into the processor 610.

The radio frequency unit 601 is configured to:
receive a first message sent by a network-side device, where the first message is used to trigger cell switch; and
perform, by the terminal, a first operation based on the first message, where
the performing a first operation includes any one of the following:
   performing random access channel RACH-less cell switch in a case that the first message meets a first condition, where the first condition is a condition corresponding to RACH-less cell switch;
   performing contention free random access CFRA-based cell switch in a case that the first message meets a second condition, where the second condition is a condition corresponding to CFRA-based cell switch; and
   performing contention based random access CBRA-based cell switch in a case that the first message meets a third condition, where the third condition is a condition corresponding to CBRA-based cell switch.

Optionally, the first condition includes at least one of the following:
the first message carries timing advance TA information;
the first message carries beam indication information;
the first message carries indication information indicating RACH-less cell switch; and
the first message carries indication information indicating a target object, and the terminal is configured by the network-side device or is indicated by the network-side device to obtain a TA of the target object based on a second operation.

Optionally, the first condition further includes: the TA of the target object is valid.

Optionally, the processor 610 is used for at least one of the following:
detecting or measuring, by the terminal, a reference signal corresponding to the beam indication information carried in the first message; and determining, by the terminal, a downlink receive beam based on the beam indication information carried in the first message, and receiving downlink data; and
determining, by the terminal, a target uplink resource based on the TA information carried in the first message and a first uplink resource, determining an uplink transmit beam based on the beam indication information carried in the first message, and sending uplink data on the target uplink resource based on the uplink transmit beam, where the first uplink resource is an uplink resource pre-configured or scheduled by a network.

Optionally, the second condition includes at least one of the following:
the first message does not carry TA information;
the first message carries beam indication information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object includes CFRA resource configuration information; and
the first message carries RACH resource indication information.

Optionally, the RACH resource indication information includes at least one of the following:
an identifier of the target object, a reference signal index, a preamble index, and a preamble mask index.

Optionally, the processor 610 is used for at least one of the following:
determining, by the terminal, a target RACH resource based on the beam indication information carried in the first message, and sending a preamble on the target RACH resource; and after a RACH procedure ends, determining, by the terminal based on the beam indication information carried in the first message, an uplink beam or a downlink beam used for data transmission; and
performing, by the terminal, a RACH procedure based on a CFRA resource indicated in the pre-configuration information corresponding to the target object indicated in the first message; and if the first message carries the beam indication information, not using, by the terminal, a beam corresponding to the beam indication information to perform data transmission.

Optionally, the third condition includes at least one of the following:
the first message does not carry TA information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object does not include CFRA resource configuration information;
the first message does not carry RACH resource indication information;
the first message carries RACH resource indication information, where the RACH resource indication information does not include a preamble index, or a value of a preamble index is 0; and
the first message carries indication information indicating a target object, and pre-configuration information corresponding to the target object includes configuration information of a common RACH resource.

Optionally, the second operation includes:
obtaining the TA of the terminal at the target object based on at least one of a downlink receiving time difference of the terminal between a source object and the target object, TA indication information of the terminal at the source object, and a timing difference between the source object and the target object.

Optionally, the processor 610 is used for at least one of the following:
determining, by the terminal, the target RACH resource based on at least one of the configuration information that is of the common RACH resource and that is included in the pre-configuration information corresponding to the target object indicated in the first message and the RACH resource indication information carried in the first message, and performing the RACH procedure; and
not using, by the terminal in a case that the first message carries the beam indication information, the beam corresponding to the beam indication information to perform data transmission.

Optionally, the not using, by the terminal in a case that the first message carries the beam indication information, the beam corresponding to the beam indication information to perform data transmission includes:
not detecting or measuring, by the terminal, the reference signal corresponding to the beam indication information.

It may be understood that for implementing processes of the implementations mentioned in this embodiment, reference may be made to related descriptions of FIG. 6 in the method embodiment, and same or corresponding technical effects are achieved. To avoid repetition, details are not described herein again.

Specifically, the terminal in this embodiment of this application further includes instructions or a program that is stored in the memory 609 and that is capable of running on the processor 610. The processor 610 invokes the instructions or the program in the memory 609 to perform the method performed by the modules shown in FIG. 5, and same technical effects are achieved. To avoid repetition, details are not described herein again.

An embodiment of this application further provides a network-side device, including a processor and a communication interface. The communication interface is coupled to the processor. The processor is configured to run a program or instructions to implement the steps of the method embodiment shown in FIG. 3. The network-side device embodiment corresponds to the foregoing method embodiment. Each implementing process and implementation of the foregoing method embodiments are applicable to the network-side device embodiment, and same technical effects can be achieved.

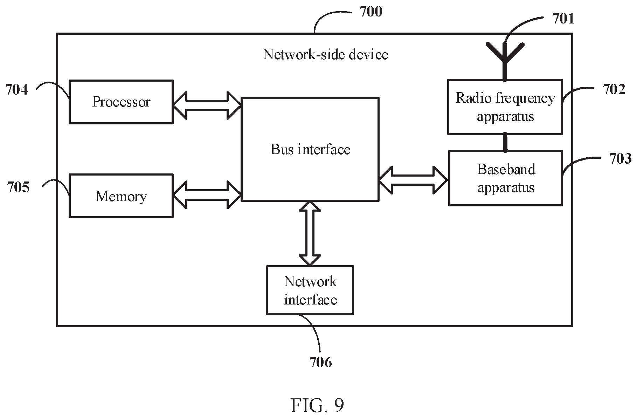

Specifically, an embodiment of this application further provides a network-side device. The network-side device may be a first node, a second node, or a data providing node. As shown in FIG. 9, the network-side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701, and sends the received information to the baseband apparatus 703 for processing. In a downlink direction, the baseband apparatus 703 processes to-be-sent information, and sends processed information to the radio frequency apparatus 702. After processing the received information, the radio frequency apparatus 702 sends processed information through the antenna 701.

A method performed by the network-side device in the foregoing embodiment may be implemented in the baseband apparatus 703. The baseband apparatus 703 includes a baseband processor.

For example, the baseband apparatus 703 may include at least one baseband board. A plurality of chips are disposed on the baseband board. As shown in FIG. 9, one of the chips is, for example, the baseband processor, and is connected to the memory 705 by using a bus interface, to invoke a program in the memory 705 to perform an operation of a network device shown in the foregoing method embodiment.

The network-side device may further include a network interface 706, and the interface is, for example, a common public radio interface (Common Public Radio Interface, CPRI).

Specifically, the network-side device 700 in this embodiment of this application further includes instructions or a program stored in the memory 705 and capable of running on the processor 704. The processor 704 invokes the instructions or the program in the memory 705 to perform the method performed by the modules shown in FIG. 6, and same technical effects are achieved. To avoid repetition, details are not described herein again.

An embodiment of this application further provides a readable storage medium. The readable storage medium stores a program or instructions. The processes in the foregoing cell switch method embodiment are implemented when the program or the instructions are executed by a processor, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing cell switch method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing cell switch method embodiment, and same technical effects can be achieved. To avoid repetition, details are not described herein again.

An embodiment of this application further provides a cell switch system, including a terminal and a network-side device. The terminal may be configured to perform the steps of the foregoing cell switch method applied to the terminal, and the network-side device may be configured to perform the steps of the foregoing cell switch method applied to the network-side device.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A cell switch method, comprising:
receiving, by a terminal, a first message sent by a network-side device, wherein the first message is used to trigger cell switch; and
performing, by the terminal, a first operation based on the first message, wherein
the performing a first operation comprises any one of the following:
performing random access channel RACH-less cell switch in a case that the first message meets a first condition, wherein the first condition is a condition corresponding to RACH-less cell switch;
performing contention free random access CFRA-based cell switch in a case that the first message meets a second condition, wherein the second condition is a condition corresponding to CFRA-based cell switch; and
performing contention based random access CBRA-based cell switch in a case that the first message meets a third condition, wherein the third condition is a condition corresponding to CBRA-based cell switch.

2. The method according to claim 1, wherein the first condition comprises at least one of the following:
the first message carries timing advance TA information;
the first message carries beam indication information;
the first message carries indication information indicating RACH-less cell switch; and
the first message carries indication information indicating a target object, and the terminal is configured by the network-side device or is indicated by the network-side device to obtain a TA of the target object based on a second operation.

3. The method according to claim 2, wherein the first condition further comprises: the TA of the target object is valid.

4. The method according to any one of claims 1 to 3, wherein the method further comprises at least one of the following:
detecting or measuring, by the terminal, a reference signal corresponding to the beam indication information carried in the first message;
determining, by the terminal, a downlink receive beam based on the beam indication information carried in the first message, and receiving downlink data; and
determining, by the terminal, a target uplink resource based on the TA information carried in the first message and a first uplink resource, determining an uplink transmit beam based on the beam indication information carried in the first message, and sending uplink data on the target uplink resource based on the uplink transmit beam, wherein the first uplink resource is an uplink resource pre-configured or scheduled by a network.

5. The method according to any one of claims 1 to 4, wherein the second condition comprises at least one of the following:
the first message does not carry TA information;
the first message carries beam indication information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object comprises CFRA resource configuration information; and
the first message carries RACH resource indication information.

6. The method according to claim 5, wherein the RACH resource indication information comprises at least one of the following:
an identifier of the target object, a reference signal index, a preamble index, and a preamble mask index.

7. The method according to any one of claims 1 to 6, wherein the method further comprises at least one of the following:
determining, by the terminal, a target RACH resource based on the beam indication information carried in the first message, and sending a preamble on the target RACH resource; and after a RACH procedure ends, determining, by the terminal based on the beam indication information carried in the first message, an uplink beam or a downlink beam used for data transmission; and
performing, by the terminal, a RACH procedure based on a CFRA resource indicated in the pre-configuration information corresponding to the target object indicated in the first message; and if the first message carries the beam indication information, not using, by the terminal, a beam corresponding to the beam indication information to perform data transmission.

8. The method according to any one of claims 1 to 7, wherein the third condition comprises at least one of the following:
the first message does not carry TA information;
the first message does not carry indication information indicating RACH-less cell switch;
the first message carries indication information indicating a target object, and the terminal is not configured by the network-side device or is not indicated by the network-side device to obtain a TA of the target object based on a second operation;
the first message carries indication information indicating a target object, the terminal is configured by the network-side device or is indicated by the network-side device to obtain a TA of the target object based on a second operation, and the TA of the target object is invalid;
the first message carries indication information indicating a target object, and pre-configuration information corresponding to the target object does not comprise CFRA resource configuration information;
the first message does not carry RACH resource indication information;
the first message carries RACH resource indication information, wherein the RACH resource indication information does not comprise a preamble index, or a value of a preamble index is 0; and
the first message carries indication information indicating a target object, and pre-configuration information corresponding to the target object comprises configuration information of a common RACH resource.

9. The method according to claim 2, 5, or 8, wherein the second operation comprises:
obtaining the TA of the terminal at the target object based on at least one of a downlink receiving time difference of the terminal between a source object and the target object, TA indication information of the terminal at the source object, and a timing difference between the source object and the target object.

10. The method according to any one of claims 1 to 9, wherein the method further comprises at least one of the following:
determining, by the terminal, the target RACH resource based on at least one of the configuration information that is of the common RACH resource and that is comprised in the pre-configuration information corresponding to the target object indicated in the first message and the RACH resource indication information carried in the first message, and performing the RACH procedure; and
not using, by the terminal in a case that the first message carries the beam indication information, the beam corresponding to the beam indication information to perform data transmission.

11. The method according to any one of claims 1 to 10, wherein the not using, by the terminal in a case that the first message carries the beam indication information, the beam corresponding to the beam indication information to perform data transmission comprises:
not detecting or measuring, by the terminal, the reference signal corresponding to the beam indication information.

12. A cell switch method, comprising:
sending, by a network-side device, a first message to a terminal, wherein the first message is used to indicate to perform a first operation, wherein
that the first message is used to indicate to perform a first operation comprises any one of the following:
in a case that the first message meets a first condition, the first message is used to indicate to perform RACH-less cell switch, wherein the first condition is a condition corresponding to RACH-less cell switch;
in a case that the first message meets a second condition, the first message is used to indicate to perform contention free random access CFRA-based cell switch, wherein the second condition is a condition corresponding to CFRA-based cell switch; and
in a case that the first message meets a third condition, the first message is used to indicate to perform contention based random access CBRA-based cell switch, wherein the third condition is a condition corresponding to CBRA-based cell switch.

13. The method according to claim 12, wherein the first message carries beam indication information in a case that the first message meets a fourth condition, wherein
the fourth condition comprises at least one of the following:
the first message carries TA information;
the first message carries indication information indicating RACH-less cell switch;
the first message carries indication information indicating a target object, and the terminal is configured by the network-side device or is indicated by the network-side device to obtain a TA of the target object based on a second operation;
the first message carries RACH resource indication information; and
the first message carries indication information indicating a target object, and pre-configuration information corresponding to the target object comprises CFRA resource configuration information.

14. A cell switch apparatus, wherein a terminal comprises the cell switch apparatus, and the apparatus comprises:
a receiving module, configured to receive a first message sent by a network-side device, wherein the first message is used to trigger cell switch; and
an execution module, configured to perform a first operation based on the first message, wherein
the performing a first operation comprises any one of the following:
performing random access channel RACH-less cell switch in a case that the first message meets a first condition, wherein the first condition is a condition corresponding to RACH-less cell switch;
performing contention free random access CFRA-based cell switch in a case that the first message meets a second condition, wherein the second condition is a condition corresponding to CFRA-based cell switch; and
performing contention based random access CBRA-based cell switch in a case that the first message meets a third condition, wherein the third condition is a condition corresponding to CBRA-based cell switch.

15. A cell switch apparatus, wherein a network-side device comprises the cell switch apparatus, and the apparatus comprises:
a sending module, configured to send a first message to a terminal, wherein the first message is used to indicate to perform a first operation, wherein
that the first message is used to indicate to perform a first operation comprises any one of the following:
in a case that the first message meets a first condition, the first message is used to indicate to perform RACH-less cell switch, wherein the first condition is a condition corresponding to RACH-less cell switch;
in a case that the first message meets a second condition, the first message is used to indicate to perform contention free random access CFRA-based cell switch, wherein the second condition is a condition corresponding to CFRA-based cell switch; and
in a case that the first message meets a third condition, the first message is used to indicate to perform contention based random access CBRA-based cell switch, wherein the third condition is a condition corresponding to CBRA-based cell switch.

16. A terminal, comprising a processor and a memory, wherein the memory stores a program or instructions capable of running on the processor, and the steps of the cell switch method according to any one of claims 1 to 11 are implemented when the program or instructions are executed by the processor.

17. A network-side device, comprising a processor and a memory, wherein the memory stores a program or instructions capable of running on the processor, and the steps of the cell switch method according to either of claims 12 and 13 are implemented when the program or the instructions are executed by the processor.

18. A chip, wherein the chip comprises a processor and a communication interface, the communication interface is coupled to the processor, and the processor is configured to run a program or instructions to implement the steps of the cell switch method according to any one of claims 1 to 11 or the steps of the cell switch method according to either of claims 12 and 13.

19. A readable storage medium, wherein the readable storage medium stores a program or instructions, and the steps of the cell switch method according to any one of claims 1 to 11 or the steps of the cell switch method according to either of claims 12 and 13 are implemented when the program or instructions are executed by a processor.
